# EUROPEAN PATENT APPLICATION

(11) **EP 2 141 016 A1**
(43) Date of publication of application: **06.01.2010**
(21) Application number: 08382024.1
(22) Date of filing: 01.07.2008
(51) Int. Cl.: B32B 27/32

(54) **Films, articles prepared therefrom and methods of making the same**

(71) Applicant: DOW GLOBAL TECHNOLOGIES INC., Midland, MI 48674 (US)
(72) Inventor: Villan Arroyo, Maria Isabel, Midland, MI 48674 (US); Donkers, Ellen H.D., Midland, MI 48674 (US)
(74) Representative: Elzaburu Marquez, Alberto

(57) **Abstract**

The invention provides a film comprising at least three layers, one inner layer adjacent to two outer layers, and wherein at least one inner layer is formed from a composition comprising an ethylene-based polymer with a density greater than, or equal to, 0.945 g/cc or a cyclic olefin copolymer; and
wherein each outer layer is, independently, formed from a composition comprising a propylene-based polymer;
and wherein the at least one inner layer is less than, or equal to, 25 percent of the total film thickness.

## Description

### FIELD OF INVENTION

The invention relates to multilayered films, each containing at least three layers, and where at least one inner layer is formed from a composition comprising a high density ethylene-based polymer or a cyclic olefin copolymer, and where each outer layer is, independently, formed from a composition comprising a propylene-based polymer. Such films show improved tear properties and improved moisture barrier properties.

### BACKGROUND OF INVENTION

Films are used in numerous packaging applications, such in industrial, food and specialty packaging. For such packaging, it is desirable that the package be formed from a film that has a combination of specific properties, such as good moisture barrier properties, good tear properties, and good optics.

Currently cast polypropylene films are used for their good optics in combination with high Elmendorf tear. However, in certain application, such as food packaging, where water barrier is required, cast polypropylene films are not sufficient, and BoPP (bi-oriented polypropylene) films must be used. However, the oriented polypropylene films have inferior tear properties. In many applications, where tear propagation is an important performance requirement, other types of films, such as laminated films are required. Such films provide a barrier to moisture, and have good tear properties. However, lamination is a costly process, and there is a need for lower cost films with improve barrier to moisture and good tear properties.

U.S. Publication No. 2003/0211350 discloses a thermoplastic multilayer film which comprises: a) a core layer, comprising a polyolefin selected from the group consisting of isotactic PP homopolymer, EP copolymer, HDPE, and LLDPE; b) a first transition layer external to the core layer wherein the first transition layer comprises a polyolefin selected from the group consisting of syndiotactic PP, EP copolymer, PB copolymer, EPB terpolymer, MDPE, LLDPE, LDPE, metallocene-catalyzed PE, EVA copolymer, EMA copolymer, and ionomer; and c) a first skin layer external to the first transition layer and the core layer wherein the first skin layer comprises a polyolefin selected from the group consisting of PP homopolymer, HDPE, EP copolymer, PB copolymer, EPB terpolymer, MDPE, and LLDPE, the first skin layer being at least 0.5 micron in thickness with a melting point at least 5° C. greater than the first transition layer.

European Patent Application No. 1529631A1 discloses an easy tear packaging film formed from a coextruded mono-web having a linear low density polyethylene heat sealant layer, a high density polyethylene barrier layer and a polypropylene print layer. The mono-web is uniaxially oriented in the transverse direction to provide linear tear characteristics. Ink is printed on the print layer. A clear energy cured coating is disposed on the print layer over the ink to provide high gloss, scuff resistance and heat resistance.

*Novel Structures by Microlayer Coextrusion- Talc-Filled PP, PC*/*SAN, and HDPE*/*LLDPE*, Mueller et al., Polymer Engineering and Science, February 1997, Vol. 37, No. 2, 355-362; discloses microlayer and nanolayer structures which contain large specific interfacial areas, and which are ideal for fundamental studies of phenomena such as interdiffusion and adhesion. Three examples of microlayered materials with up to 1024 layers are formed using a coextrusion process.

U.S. Patent 4,927,885 discloses polypropylene resin compositions for producing polypropylene films. The polypropylene resin compositions comprise 70 to 99 parts by weight of polypropylene and 1 to 30 parts by weight of a specific hydrogenated petroleum resin. The hydrogenated petroleum resin is prepared from by-products of oil and petrochemical industries, such as C₅ fraction and C₉ fraction by-produced in naphtha steam cracking process.

Japanese Publication No. 2002-137348 (Abstract) discloses a film for stretch packaging which consists of a three-layer structure of a base material layer and two surface layers. The base material layer consists of the following: a) 10-30 weight percent of a highly crystalline polypropylene with a mmmm pentad index of 0.970-0.995, obtained by 13C-NMR, b) 80-40 weight percent of an olefin soft resin, and c 10-30 weight percent of a hydrogenated resin selected from petroleum resin, terpene resin and rosin resin. Both surface layers consist of resins with heat sealing properties.

Canadian Patent Application No. 2125891 discloses a film having one or more polyolefin layers, and a barrier coating. At least one polyolefin layer has a surface for receiving barrier coatings, and which includes a polyolefin and a hydrocarbon resin; the barrier coating is situated adjacent to this surface.

European Patent Application No. 0588667A2 discloses a multiple layer film that has at least one layer comprising a blend of propylene polymer or copolymer, and a hydrocarbon resin; and two additional layers comprising a propylene polymer or copolymer, ethylene alpha olefin copolymer, ionomer, polybutene, or blends thereof. A core layer of ethylene vinyl alcohol copolymer or other oxygen barrier material, or high density polyethylene, can be included in some embodiments.

Variables That Affect/Control High-Density Polyethylene Film Oxygen-Moisture Barrier, William G. Todd, Journal of Plastic Film and Sheeting, 2003, 19, 209-220; discloses multiple layer polyolefin-based films, containing polyethylene as the primary film component, used for packages that are effective in providing moisture and oxygen barriers. Film crystalline structure, relaxation rates of molten polyethylene, polyethylene manufacturing technology, polyethylene resin physical properties, atmospheric conditions, and film fabrication technology and structure are examined.

Specialty Products Based on Commodity Polymers, Lemstra et al., Polymer, 1985, Vol. 26, 1372-1384; discloses synthetic polymers, and in particular, high-modulus/high-strength polyethylene fibres and barrier films based on polypropylene.

International Patent Application WO 96/02388 discloses an oriented film structure of improved water vapor transmission rate that is prepared from an extruded and stretched mixture of the following: a) high crystallinity polypropylene (HCPP) having intermolecular stereoregularity greater than 93 percent, and b) a moisture barrier improving amount of polyterpene resin.

U.S. Publication No. 2002/0071960 discloses a biaxially oriented, multilayer polypropylene film, which comprises at least one base layer B, one interlayer Z and one top layer D, and contains migrating additives. The film contains a maximum of 0.15 percent, by weight, of migrating additives, based on the total weight of the film. The multilayer film structure is produced by coextrusion and biaxial stretching, followed by heat-setting, and, an optional, corona treatment.

International Patent Application WO 98/55537 discloses high density polyethylene (HDPE) films containing hydrocarbon resins having improved moisture barrier.

Improving Barrier Properties of Polypropylene Films, Thomas R. Mueller, Journal of Plastic Film and Sheeting, Vol. 14, 1998, 226-233; discloses films formed from polyolefins, and crystalline cores, crystalline layers, coatings of acrylic and polyvinylidene chloride copolymers (PVDC), and co extrusions of biaxial oriented polypropylene (OPP) and biaxial oriented polyethylene terephthalate (PET). Permeability tests with menthol and d-limonene showed that in many cases the films with a lowered water vapor transmission rate (WVTR) also provided an improved barrier to these organic compounds, which simulate the flavors and taste of several types of foods.

Blown PP Based Coextruded Films as an Alternative for the Flexible Packaging Industry, German V. Laverde, ANTEC 2002, 2479-2483; discloses PP resins for the production of coextruded or monolayer blown films. This paper presents a comparison of mechanical and optical properties among structures using different polypropylene resins and different layer thickness.

A New Family of sHDPE Polymers for Enhanced Moisture Barrier Performance, Aubee et al., Journal of Plastic Film and Sheeting, 2006, 22, 315-330; discloses a new class of single site catalyzed high density polyethylene (sHDPE) resins for moisture barrier applications.

There remains a need for an alternative to laminated BoPP/cast PP films in applications where barrier to moisture is a requirement, for example in food packaging. Such films should good tear properties and good moisture barrier properties. This is a further need for films formed by a lower cost extrusion, which does not require any additional steps prior to or after extrusion, no tie layers/compatibilizers. These needs and others have been met by the following invention.

### SUMMARY OF THE INVENTION

The invention provides a film comprising at least three layers, one inner layer adjacent to two outer layers, and wherein at least one inner layer is formed from a composition comprising an ethylene-based polymer with a density greater than, or equal to, 0.945 g/cc or a cyclic olefin copolymer; and
wherein each outer layer is, independently, formed from a composition comprising a propylene-based polymer;
and wherein the at least one inner layer is less than, or equal to, 25 percent of the total film thickness.

### BRIEF DESCRIPTION OF THE DRAWINGS

Figure 1 depicts the water vapor transmission rate of the noted films.
Figure 2 depicts the Tear CD and MD of the noted films.
Figure 3 depicts the Drop Dart Impact of the noted films.
Figure 4 depicts the 2% Secant Modulus CD and MD of the noted films.
Figure 5 depicts the Optics - Haze (%) values of the noted films.
Figure 6 depicts the Optics - Gloss 45° (%) values of the noted films.
Figure 7 depicts the water vapor transmission rate of the noted films.
Figure 8 depicts the Tear CD and MD of the noted films.
Figure 9 depicts the Drop Dart Impact of the noted films.
Figure 10 depicts the 2% Secant Modulus CD and MD of the noted films.
Figure 11 depicts the Optics - Haze (%) values of the noted films.
Figure 12 depicts the Optics - Gloss 45° (%) values of the noted films.

### DETAILED DESCRIPTION OF THE INVENTION

As discussed above, the invention provides a film comprising at least three layers, one inner layer adjacent to two outer layers, and wherein at least one inner layer is formed from a composition comprising an ethylene-based polymer with a density greater than, or equal to, 0.945 g/cc or a cyclic olefin copolymer; and
wherein each outer layer is, independently, formed from a composition comprising a propylene-based polymer;
and wherein the at least one inner layer is less than, or equal to, 25 percent of the total film thickness.

In one embodiment, the least one inner layer is less than, or equal to, 20 percent of the total film thickness.

In one embodiment, the least one inner layer is less than, or equal to, 18 percent of the total film thickness.

In one embodiment, the at least one inner layer has a thickness from 10 to 25 percent, preferably from 10 to 30 percent of the total thickness of the film.

In one embodiment, the at least one inner layer is formed from a composition comprising an ethylene-based polymer with a density greater than, or equal to, 0.945 g/cc. In a further embodiment, the composition used to form the inner layer comprises greater than 80 weight percent, preferably greater than 90 weight percent, and more preferably greater than 95 weight percent, of the ethylene-base polymer.

In one embodiment, the ethylene-based polymer has a density greater than, or equal to, 0.95 g/cc, preferably greater than, or equal to, 0.96 g/cc. In a further embodiment, the composition used to form the inner layer comprises greater than 80 weight percent, preferably greater than 90 weight percent, and more preferably greater than 95 weight percent, of the ethylene-base polymer.

In one embodiment, the ethylene-based polymer is an ethylene homopolymer.

The ethylene-based polymer may have a combination of two or more embodiments as described herein.

In one embodiment, the propylene-based polymer has a density greater than, or equal to, 0.88 g/cc, preferably greater than, or equal to, 0.89 g/cc.

In one embodiment, the propylene-based polymer has a melt flow rate (MFR) greater than, or equal to, 6 g/10 min, preferably greater than, or equal to, 8 g/10 min.

In one embodiment, the propylene-based polymer is a propylene homopolymer.

In one embodiment, the propylene-based polymer is a propylene/ethylene interpolymer.

A propylene-based polymer may have a combination of two or more embodiments as described herein.

In one embodiment, each outer layer is formed from the same composition.

In one embodiment, film consists of three layers. In a further embodiment, the three layers have a thickness ratio from 40/20/40 to 45/10/45.

In one embodiment, film consists of five layers. In a further embodiment, the five layers have a 25/10/30/10/25 thickness ratio.

In one embodiment, at least two inner layers is formed from a composition comprising an ethylene-based polymer with a density greater than, or equal to, 0.95 g/cc.

In one embodiment, the film has a total thickness less than, or equal to, 100 microns.

In one embodiment, the film has a total thickness less than, or equal to, 50 microns.

In one embodiment, the film is formed by a co-extrusion process. In a further embodiment, the film is formed by a coextrusion blown film process.

In one embodiment, the film is formed by a cast extrusion process.

In one embodiment, the film has a WVTR less than, or equal to, 5 g/m²/day, preferably less than, or equal to, 4 g/m²/day.

In one embodiment, the film has a CD tear strength greater than, or equal to, 400 g, preferably greater than, or equal to, 500 g.

In one embodiment, the film has a MD tear strength greater than, or equal to, 200 g, preferably greater than, or equal to, 300 g.

The thickness of a film layer can be determined, as known in the art, from the mass ratios of the layer compositions of the extruders used to form a multilayered film, and the final thickness of the multilayered film. For each film layer, the solid state density of each composition is determined, and the mass flow (kg/hr) of the associated extruder is known from the commonly used gravimetric feeders. From these two parameters, the volumetric flow of each layer composition can be determined. The volume ratio of each layer can be determined from the volume flow of the individual layer divided by the total volume flows of all layer compositions. For a constant total film thickness and width, the thickness ratio for each layer is the same as the volume ratio.

The thickness of a film layer can also be determined, as known in the art, by microscopic techniques, such as optical microscopy or electronic microscopy. As an example, a thin slice of the film is cut perpendicularly to the plane of the film using a microtome blade as follows. The film is cooled in liquid nitrogen in a microtome holder. Then a microtome blade cuts several slices from about 10 to 15 microns in thickness. These slices are then observed with an optical microscope, and an image is projected therefrom. A software program, as known in the art, can be used to measure the thickness of each layer as shown on the projected image. Measurements can be made at different points on the image, and then an average can be determined. The film layers are clearly distinguishable by their different contrasts.

In one embodiment, the thickness of said inner layer is less than the thickness of a outer layer, and preferably less than thickness of each outer layer.

In one embodiment, the film does not contain an adhesive layer between two film layers.

In another embodiment, the at least one inner layer does not comprise a polar polymer selected from the group consisting of an ethylene vinyl acetate, a polyethylene terephthalate, a polyester, a polyamide, and combinations thereof.

An inventive film may comprise a combination of two or more embodiments as described herein.

The invention also provides an article comprising at least one component formed from an inventive film.

An inventive article may have a combination of two or more embodiments as described herein.

### Ethylene-based Polymers for used in Inner Layer

Ethylene-based polymers for used in the inner layer(s) include ethylene homopolymers or interpolymers as the sole polymer component, or as the major (> 50 weight percent based on sum weight of polymers) polymer component. Such polymers high density polyethylene (HDPE), homogeneously branched linear ethylene polymers, homogeneously branched substantially linear ethylene polymers, and heterogeneously branched linear ethylene polymers. The amount of one or more of these polymers, if any, in a film composition, will vary depending on the properties desired, the other components, and the type polyethylene(s).

In one embodiment, the ethylene-based polymer has a density greater than 0.946 g/cc, preferably greater than, or equal to, 0.95 g/cc, and more preferably, greater than, or equal to, 0.96 g/cc.

In one embodiment, the ethylene-based polymer has a density less than 0.98 g/cc, preferably less than, or equal to, 0.975 g/cc, and more preferably, less than, or equal to, 0.97 g/cc.

In one embodiment, the ethylene-based polymer has a melt index (I2) greater than, or equal to, 5 g/10 min, preferably greater than, or equal to, 6 g/10 min, and more preferably greater than, or equal to, 8 g/10 min.

In one embodiment, the ethylene-based polymer has a melt index (I2) less than, or equal to, 12 g/10 min, preferably less than, or equal to, 10 g/10 min, and more preferably less than, or equal to, 9 g/10 min.

Suitable comonomers useful for polymerizing with ethylene include, but are not limited to, ethylenically unsaturated monomers, conjugated or nonconjugated dienes or polyenes. Examples of such comonomers include the C₃-C₂₀ α-olefins, such as propylene, isobutylene, 1-butene, 1-pentene, 1-hexene, 4-methyl-1-pentene, 1-heptene, 1-octene, 1-nonene, 1-decene. Preferred comonomers include propylene, 1-butene, 1-hexene, 4-methyl-1-pentene and 1-octene, and more preferably propylene, 1-butene, 1-hexene and 1-octene, the latter of which is especially preferred. Other suitable monomers include styrene, halo-or-alkyl-substituted styrenes, tetrafluoroethylenes, vinylbenzocyclobutanes, butadienes, isoprenes, pentadienes, hexadienes, octadienes and cycloalkenes, for example, cyclopentene, cyclohexene and cyclooctene. Typically, ethylene is copolymerized with one C₃-C₂₀ α-olefin. Preferred comonomers include C₃-C₈ α-olefins, and preferably propylene, 1-butene, 1-pentene, 4-methyl-1-pentene, 1-hexene, 1-heptene, and 1-octene, and more preferably propylene, 1-butene, 1-hexene, and 1-octene.

The terms "homogeneous" and "homogeneously-branched" are used in reference to ethylene/α-olefin interpolymers, in which the α-olefin comonomer is randomly distributed within a given polymer molecule, and substantially all of the polymer molecules have the same ethylene-to-comonomer ratio.

Included amongst the homogeneously branched linear ethylene interpolymers are ethylene polymers, which lack long chain branching (or measurable amounts of long chain branching), but do have short chain branches, derived from the comonomer polymerized into the interpolymer, and which are homogeneously distributed, both within the same polymer chain, and between different polymer chains. That is, homogeneously branched linear ethylene interpolymers lack long chain branching (or measurable amounts of long chain branching), just as is the case for the linear low density polyethylene polymers or linear high density polyethylene polymers, and are made using uniform branching distribution polymerization processes, as described, for example, by Elston in U.S. Patent 3,645,992. Commercial examples of homogeneously branched linear ethylene/α-olefin interpolymers include TAFMER^{™} polymers supplied by the Mitsui Chemical Company, and EXACT^{™} polymers supplied by Exxon Chemical Company.

The homogeneously branched substantially linear ethylene interpolymers are described in US Patent Nos. 5,272,236; 5,278,272; 5,703.187; 6,054,544; 6,335,410, and 6,723,810, the entire contents of each are herein. Some of these references also disclose methods of preparing these polymers.

In addition, the substantially linear ethylene interpolymers are homogeneously branched ethylene polymers having long chain branching. The long chain branches have the same comonomer distribution as the polymer backbone, and can have about the same length as the length of the polymer backbone. The carbon length of a long chain branch is longer than the carbon length of a short chain branch formed from the incorporation of one comonomer into the polymer backbone. Long chain branching can be determined by using 13C Nuclear Magnetic Resonance (NMR) spectroscopy, and can be quantified using the method of Randall (Rev. Macromol. Chem. Phys., C29 (2 &3), 1989, p. 285-297), the disclosure of which is incorporated herein by reference.

Typically, "substantially linear" means that the bulk polymer is substituted, on average, with 0.01 long chain branches per 1000 total carbons (including both backbone and branch carbons) to 3 long chain branches per 1000 total carbons. Preferred polymers are substituted with 0.01 long chain branches per 1000 total carbons, to 1 long chain branch per 1000 total carbons, more preferably from 0.05 long chain branches per 1000 total carbons to 1 long chain branch per 1000 total carbons, and especially from 0.3 long chain branches per 1000 total carbons to 1 long chain branch per 1000 total carbons.

The heterogeneously branched linear ethylene interpolymers can also be used in the present invention. Heterogeneous linear ethylene interpolymers include interpolymers of ethylene and one or more C₃ to C₈ α-olefins. Homopolymers of ethylene can also be prepared using the same catalysts that are used to prepare the heterogeneous systems, such as Ziegler-Natta catalysts. Both the molecular weight distribution and the short chain branching distribution, arising from α-olefin copolymerization, are relatively broad compared to homogeneous linear ethylene polymers. Heterogeneous linear ethylene polymers can be made in a solution, slurry, or gas phase process using a Ziegler-Natta catalyst, and are well known to those skilled in the art. For example, see U.S. Patent No. 4,339,507, the entire content of which is incorporated herein by reference.

Mixtures of heterogeneous and homogeneous ethylene polymers ("composite polyethylene") can also be used for the film compositions of the present invention, such as those disclosed by Kolthammer et al., in U.S Patents 5,844,045; 5,869,575; and 6,448,341; the entire contents of each are incorporated herein by reference.

The ethylene-based polymers may have a combination of two or more embodiments as described herein.

### Propylene-based Polymers for Use in the Outer Layer

Suitable propylene-based polymers for use in the inner or skin layers include propylene homopolymers, propylene-based interpolymers. In a preferred embodiment, the propylene-based polymer is a propylene homopolymer.

In one embodiment, the propylene-based polymer has a density greater than 0.88 g/cc, preferably greater than, or equal to, 0.89 g/cc, and more preferably, greater than, or equal to, 0.90 g/cc.

In one embodiment, the propylene-based polymer has a density less than 0.93 g/cc, preferably less than, or equal to, 0.92 g/cc, and more preferably, less than, or equal to, 0.91 g/cc.

In one embodiment, the propylene-based polymer has a melt flow rate (MFR) greater than, or equal to, 6 g/10 min, preferably greater than, or equal to, 7 g/10 min, and more preferably greater than, or equal to, 8 g/10 min.

In one embodiment, the propylene-based polymer has a melt index (12) less than, or equal to, 12 g/10 min, preferably less than, or equal to, 11 g/10 min, and more preferably less than, or equal to, 10 g/10 min.

Suitable comonomers for polymerizing with propylene include ethylene, 1-butene, 1-pentene, 1-hexene, 1-heptene, 1-octene, 1-nonene, 1-decene, 1-unidecene, 1dodecene, as well as 4-methyl-1-pentene, 4-methyl-1-hexene, 5-methyl-1-hexene, vinylcyclohexane, and styrene. The preferred comonomers include ethylene, 1-butene, 1-hexene, and 1-octene, and more preferably ethylene.

Suitable propylene/α-olefin polymers, containing at least 50 mole percent polymerized propylene, fall within the invention. Suitable polypropylene base polymers include VERSIFY^{™} polymers (The Dow Chemical Company) and VISTAMAXX^{™} polymers (ExxonMobil Chemical Co.), LICOCENE^{™} polymers (Clariant), EASTOFLEX^{™} polymers (Eastman Chemical Co.), REXTAC^{™} polymers (Hunstman), and VESTOPLAST^{™} polymers (Degussa). Other suitable polymers include propylene-α-olefins block copolymers and interpolymers, and other propylene-based block copolymers and interpolymers known in the art.

In one embodiment, the propylene-based polymer is a propylene/α-olefin interpolymer or a propylene/ethylene interpolymer, which each has a molecular weight distribution less than, or equal to, 5, and preferably less than, or equal to, 4, and more preferably less than, or equal to 3. More preferably the propylene/α-olefin interpolymer has a molecular weight distribution from 1 to 5, or from 1.05 to 5, and more preferably from 1 to 4, or from 1.05 to 4 and more preferably from 1 to 3, or from 1.05 to 3.

The propylene-based polymers may have a combination of two or more embodiments as described herein.

### Additives

Stabilizer and antioxidants may be added to a resin formulation to protect the resin from degradation, caused by reactions with oxygen, which are induced by such things as heat, light or residual catalyst from the raw materials. Antioxidants are commercially available from Ciba-Geigy, located in Hawthorn, N.Y., and include Irganox® 565, 1010 and 1076 which are hindered phenolic antioxidants. These are primary antioxidants, which act as free radical scavengers, and may be used alone or in combination with other antioxidants, such as phosphite antioxidants, like Irgafos® 168, available from Ciba-Geigy. Phosphite antioxidants are considered secondary antioxidants, are not generally used alone, and are primarily used as peroxide decomposers. Other available antioxidants include, but are not limited to, Cyanox® LTDP, available from Cytec Industries in Stamford, Conn., and Ethanox® 1330, available from Albemarle Corp. in Baton Rouge, Louisiana. Many other antioxidants are available for use by themselves, or in combination with other such antioxidants. Other resin additives include, but are not limited to, ultraviolet light absorbers, antistatic agents, pigments, dyes, nucleating agents, fillers, slip agents, fire retardants, plasticizers, processing aids, lubricants, stabilizers, smoke inhibitors, viscosity control agents and anti-blocking agents.

A composition used to form a film layer may comprise one or more additives as described above.

In one embodiment, a film composition comprises at least one additive selected from the group consisting of antioxidants, ultraviolet light absorbers, antistatic agents, pigments, dyes, nucleating agents, fillers, slip agents, fire retardants, plasticizers, processing aids, lubricants, stabilizes, smoke inhibitors, viscosity control agents, anti-blocking agents, and combinations thereof.

In one embodiment, a film composition comprises at least one additive selected from the group consisting of antioxidants, ultraviolet light absorbers, antistatic agents, pigments, dyes, nucleating agents, fillers, slip agents, fire retardants, plasticizers, processing aids, anti-blocking agents, and combinations thereof.

### Processes for Forming Inventive Films

A film composition of the invention can be prepared by selecting the thermoplastic polymers suitable for making each layer; forming a film of each layer, and coextruding one or more layers. Desirably, the film layers are bonded continuously over the interfacial area between films. Preferably the film is formed using a co-extrusion film process.

For each layer, typically, it is suitable to extrusion blend the components and any additional additives, such as slip, anti-block, and polymer processing aids. The extrusion blending should be carried out in a manner, such that an adequate degree of dispersion is achieved. The parameters of extrusion blending will necessarily vary depending upon the components. However, typically the total polymer deformation, that is, mixing degree, is important, and is controlled by, for example, the screw-design and the melt temperature. The melt temperature during film forming will depend on the film components.

After extrusion blending, a film structure is formed. Film structures may be made by conventional fabrication techniques, for example, cast extrusion, blown films, bubble extrusion, biaxial orientation processes (such as tenter frames or double bubble processes), cast/sheet extrusion. Conventional bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192. Biaxial orientation film manufacturing processes, such as described in the "double bubble" process of U.S.-A-Patent No. 3,456,044 (Pahlke), and the processes described in U.S.-A-Patent No. 4,352,849 (Mueller), U.S.-A-Patent Nos. 4,820,557 and 4,837,084 (both to Warren), U.S.-A-Patent No. 4,865,902 (Golike et al.), U.S.-A-Patent No. 4,927,708 (Herran et al.), U.S.-A-Patent No. 4.952,451 (Mueller), and U.S.-A-Patent Nos. 4,963,419 and 5,059,481 (both to Lustig et al.), can also be used to make the novel film structures of this invention. All of these patents are incorporated herein by reference.

The film compositions of the aforementioned processes may be made to any thickness depending upon the application. Typically, the multilayered films have a thickness less than, or equal to 1000 microns, preferably less than, or equal to, 500 microns, and more preferably less than, or equal to 100 microns. In a preferred embodiment, the films have a total thickness of from 5 to 300 microns, preferably from 20 to 200 microns, more preferably from 40 to 100 microns.

### DEFINITIONS

Any numerical range recited herein, include all values from the lower value to the upper value, in increments of one unit, provided that there is a separation of at least 2 units between any lower value and any higher value. As an example, if it is stated that the amount of a component, or a value of a compositional or physical property, such as, for example, amount of a blend component, softening temperature, melt index, etc., is between 1 and 100, it is intended that all individual values, such as, 1, 2, 3, etc., and all subranges, such as, 1 to 20, 55 to 70, 197 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. Numerical ranges have been recited, as discussed herein, in reference to film thickness, melt index, melt flow rate, weight average molecular weight, molecular weight distribution, percent crystallinity, density, and other properties.

The term "multilayered film," as used herein, refers to a film structure with more than one layer or ply.

The term "film," as used herein, refers to a film structure with at least one layer or ply. The inventive films as described herein contain at least three layers or plies.

The term "inner layer," as used herein, refers to an interior film layer that is co-contiguous with another film on each surface.

The terms "skin" or "skin layer," as used herein, refers to an outermost, exterior film layer.

The term "outer layer," as used herein, refers to a layer adjacent to an inner layer. An outer layer may or may not be a skin layer.

The phrase "adjacent to," in reference to two film layers, means "in contact with," without an intervening layer between the two film layers.

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

The term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term, "ethylene-based polymer," as used herein, refers to a polymer that comprises a majority weight percent polymerized ethylene monomer (based on the total weight of the polymer).

The term, "ethylene-based interpolymer," as used herein, refers to a polymer that comprises a majority weight percent polymerized ethylene monomer (based on the total weight of the interpolymer), and at least one comonomer.

The term, "ethylene/α-olefin interpolymer," as used herein, refers to a polymer that comprises a majority weight percent polymerized ethylene monomer (based on the total weight of the interpolymer), an α-olefin comonomer, and optionally, one or more other comonomers.

The term, "propylene-based polymer," as used herein, refers to a polymer that comprises a majority weight percent polymerized propylene monomer (based on the total amount of the polymer).

The term, "propylene-based interpolymer," as used herein, refers to a polymer that comprises a majority weight percent polymerized propylene monomer (based on the total amount of the interpolymer), and at least one comonomer.

The term, "propylene/α-olefin interpolymer," as used herein, refers to a polymer that comprises a majority weight percent polymerized propylene monomer (based on the total amount of the interpolymer), an α-olefin comonomer, and optionally, one or more other comonomers.

The term, "propylene/ethylene interpolymer," as used herein, refers to a polymer that comprises a majority weight percent polymerized propylene monomer (based on the total amount of the interpolymer), ethylene comonomer, and optionally, one or more other comonomers.

### TEST PROCEDURES

The density of the ethylene-based polymers and propylene-based polymers were measured in accordance with ASTM D-792-00, which can also be used to measure density of other polymers as noted in this test.

Melt index (I₂) of ethylene-based polymers were measured in accordance with ASTM D-1238-04, condition 190°C/2.16 kg. The melt flow rate (MFR) of propylene-based polymers were measured in accordance with ASTM D-1238-04, condition 230°C/2.16 kg.

### Film Property Measurements

The Young's Modulus and 2% Secant Modulus were determined according to ISO 527-3-95. The film dimensions for "type 2 specimens" were 150 mm in length and 15 mm in width (film thickness less than 1 mm). The specimens were conditioned at 23°C, for 40 hours, ambient atmosphere, prior to testing. The clamp (with centering pins) distance on the tensile tester (INSTRON Model No. 5564) was 100 mm, and testing velocity was 5 mm/min. Five film samples were tested for each composition in cross direction (CD) and machine MD direction.

As an example, film specimens were cut from cast films, prepared from conventional cast film equipment known in the art. Blown film processing parameters for a particular polymer or polymer blend, and for a particular film configuration, can be determined by those skilled in the art. Cast film fabrication parameters for some inventive films and comparative films are provided below in the experimental section (film thicknesses of 50 microns). One skilled in the art can also prepare other types of films, such as blown films, using film fabrication parameters known in the art.

Tear resistance values were obtained using an Elmendorf tear tester in compliance with the ASTM D-1922-06a. For each film sample, ten specimens were tested in both machine (MD) and transverse/cross (CD) direction.

The falling dart film impact strength was determined by means of a dart impact tester, in accordance with the ISO 7765-1-88, using method A.

Haze and clarity were measured using a BYK-Gardner haze meter according to ISO 14782. Haze is defined as the percentage of transmitted light scattered by the film more than 2.5 degrees from the normal incident beam, whereas clarity is defined as the percentage of transmitted light that is scattered less than 4 degrees.

Gloss was measured in machine direction, and under an angle of 45°, by means of a BYK-Gardner micro-glossmeter, in compliance with ASTM D-2457-03. Gloss is a measure of the ability of a film to reflect incident light. The measured value is related to a standard that is a black mirror. Results are shown in Tables 9A and 9B below.

The films and processes of this invention, and their use, are more fully described by the following examples. The following examples are provided for the purpose of illustrating the invention, and are not to be construed as limiting the scope of the invention.

Water Vapor Transmission Rate (TAPPI T-523 om-02). This method is used to evaluate rapidly, the water vapor transfer rate (WVTR) of sheets. A specimen sheet is clamped between a high-humidity chamber (90% RH) and a dry chamber (5% or less RH), and the rate change of humidity in the dry chamber is determined. By calibration, these dynamic test results can are converted to grams of moisture per square meter-day.

Layer Thickness: Film sample is cool down on a cryocamera (Leica LN21) at a temperature lower than its Tg. Liquid nitrogen is used as the coolant. The sample is then cut by using a LEICA RM2155 microtome. Resulting cut sample is analyzed under microscopy (Leica DMLB), and the thickness of each layer is determined.

### EXPERIMENTAL

### Materials

H-302-09RSB is a propylene homopolymer (MFR (230°C/2.16 kg) = 9.5 g/10 min, d = 0.9 g/cm³ (1 cm³ = 1 cc)), available from The Dow Chemical Company;

HDPE KT10000 UE is an ethylene homopolymer (I2 (190°C/2.16 kg) = 8g/10 min., d= 0.964 g/cm³), available from the Dow Chemical Company.

Polymers typically contain one or more stabilizers as known in the art.

### Extrusion Method

Films were co-extruded in a Collin CR 136/350 cast film extruder, outfitted with three extruders, two E25M extruders and the one E30M extruder, and a water-quenched chill roll. The sample collecting speed was about 7.8 m/min. The temperature profiles were as follows: 220°C, 225°C, 230°C, 235°C and 240°C, for the E25M extruders containing the propylene-based polymer, and 217°C, 225°C, 230°C, 235°C and 230°C, for the E30M extruder containing the HDPE, and 230°C for the die. The film thickness was about 50-55 µm. Films were stored for two days at lab temperature before being analyzed. The three-layer film of polypropylene/high density polyethylene/polypropylene (thickness ratio 45/10/45). Film properties are listed in Table 1.

**Table 1: Film Properties**

| | Three layer PP* | PP/HDPE/PP** |
|---|---|---|
| WVTR (g/m2/day, 50-55 µm thickness) | 6.36 | 5.13 |
| Elmendorf tear (g) CD | 259 | 525 |
| Elmendorf tear (g) MD | 122 | 332 |
| Dart drop impact (g) | 50 | 64 |
| 2% secant modulus (MPa) CD | 466.3 | 463.8 |
| 2% secant modulus (MPa) MD | 467.8 | 446.21 |
| 45° gloss (%) | 87.5 | 86.1 |
| haze (%) | 1.6 | 2.8 |

| | | |
|---|---|---|
| * Comparative Film: three layer cast film of polypropylene (thickness ratio of about 40/20/40). Each layer formed from the propylene-based polymer, H-302-09RSB. ** Inventive film propylene homopolymer/HDPE/propylene homopolymer (thickness ratio of about 40/20/40). | | |

High density polyethylene, which has good moisture barrier properties, was used to form one or more thin core layers via the film coextrusion process discussed above. For a three-layer film containing one HDPE layer comprising 10 percent of the total film thickness (50 µm), the water vapor transmission rate (WVTR) was reduced by 20 percent, as compared with a three-layer cast film, where each layer is formed from the same propylene-based polymer, and of the same thickness. Additionally, the Elmendorf tear in cross direction for the inventive film was twice as high as the same tear in the cast film. The Elmendorf tear in the machine direction for the inventive film was almost tripled (x 2.72), as compared to that of the cast film. Furthermore, the adhesion strength between each film layer formed from the propylene-based polymer, and the film layer formed from the HDPE was found to be sufficient. Thus, no compatibilizer in either film composition was required, and no tie layer was required.

Additional three-layer and five-layer films are shown in Tables 2 and 3 below. The total thickness of each film was about 50-55 microns. The "3PP/HDPE" film was a three layer film with a 10% HDPE core layer (based on the total film thickness). The "5PP/HDPE" film was a five layer film with a 20% HDPE divided into two inner layers of 10% each (based on the total film thickness).

**Table 2**

| Film | Polymer(s) (Thickness ratio where applicable) | WVTR 45 mm g/m2/day | Impact g | Tear CD g | Tear MD g | Young modulus CD g | Young modulus MD g |
|---|---|---|---|---|---|---|---|
| A) BoPP (20) | | 2.39 | 623.5 | 1.9 | 4.67 | 3191 | 1802 |
| B) Cast PP (25) | | 5.54 | 50 | 534 | 29.6 | 694 | 694 |
| C) Laminated BoPP/ Cast PP (45) | | 3.19 | 659.5 | 66.8 | 26.8 | 1584 | 1070 |
| D) 3PP | 1 | 6.36 | 50 | 259 | 122 | 599 | 580 |
| E) 3PP/HDPE | 1/2/1 (45/10/45) | 5.13 | 64 | 525 | 332 | 602 | 505 |
| F) 3HDPE | 2 | 3.01 | 50 | 79.8 | 45.6 | 1015 | 912 |
| G) 5PP | | 5.32 | 75 | 198 | 112 | 711 | 754 |
| H) 5PP/HDPE | | 4.01 | 59.5 | 126 | 119 | 722 | 670 |
| I) 5HDPE | 2 | 2.44 | 54.5 | 104 | 48.5 | 1093 | 983 |

**Table 3**

| Film | Polymer(s) (Thickness ratio where applicable) | Tensile strength CD g | Tensile strength MD g | Haze % | Gloss 45° % | Secant modulus CD Mpa | Secant modulus MD Mpa |
|---|---|---|---|---|---|---|---|
| A) BoPP (20) | | 210 | 95 | 2.67 | 77.8 | 1593.7 | 1085 |
| B) Cast PP (25) | | 27 | 59 | 2.13 | 85.48 | 540.51 | 541.6 |
| C) Laminated BoPP/Cast PP (45) | | 96 | 56 | 2.79 | 85.4 | 938.3 | 713.3 |
| D) 3PP | 2 | 33 | 41 | 1.61 | 87.52 | 466.32 | 467.78 |
| E) 3PP/HDPE | 1/2/1 (45/10/45) | 34 | 42 | 2.77 | 86.12 | 463.76 | 446.21 |
| F) 3HDPE | 2 | 30 | 29 | 57.3 | 36.92 | 675.48 | 590.6 |
| G) 5PP | (25/10/30/10/25) | 36 | 34 | 7.32 | 68.06 | 547.98 | 573.74 |
| H) 5PP/HDPE | | 37 | 41 | 11.2 | 62.32 | 542.8 | 513.48 |
| I) 5HDPE | 2 | 31 | 29 | 53.5 | 41.28 | 694.77 | 642.06 |

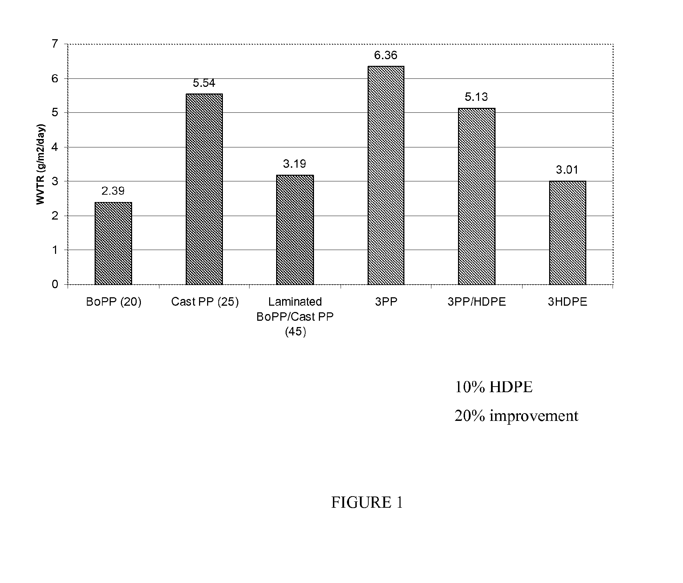

Property results for the laminate and three layer (45/10/45) films are shown in Figures 1-6.
Figure 1: Water vapor transmission rate of 45 µm films.

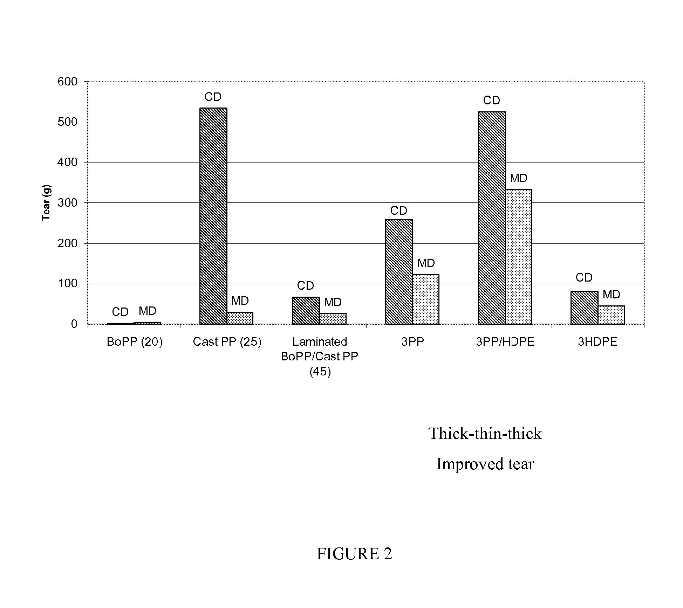

Figure 2: Tear CD and MD

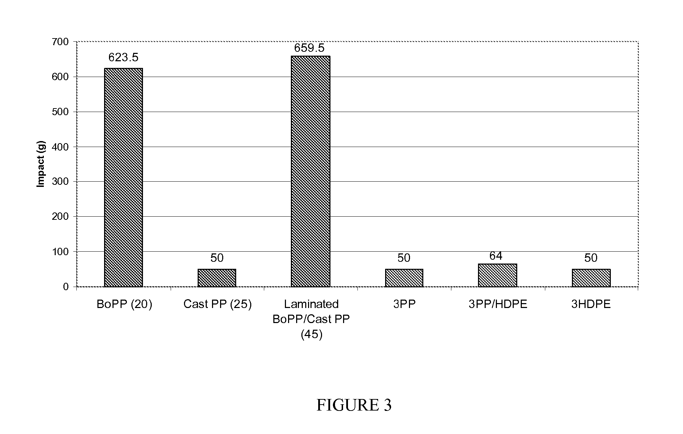

Figure 3: Drop Dart Impact

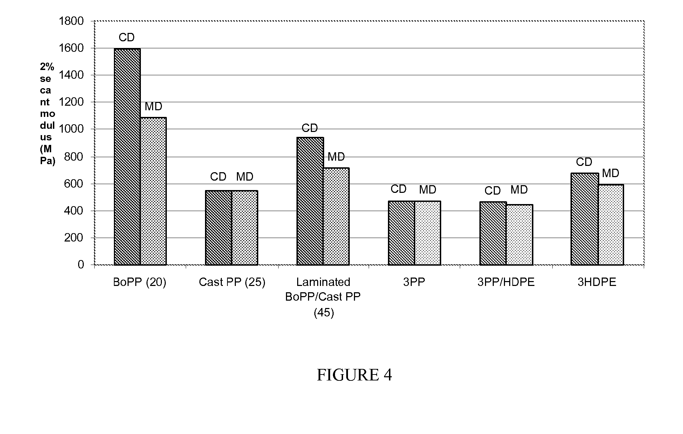

Figure 4: 2% Secant Modulus CD and MD

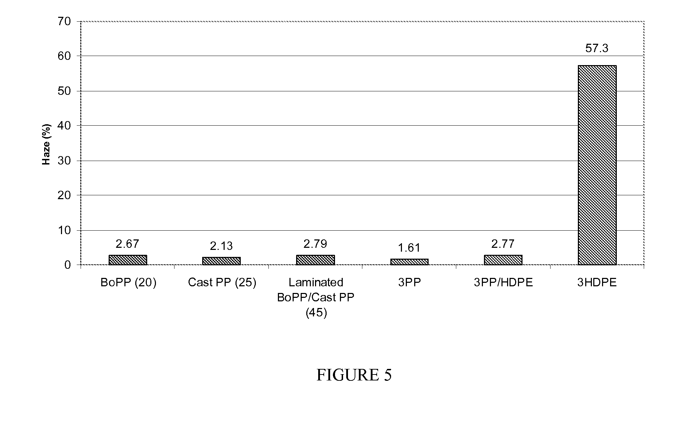

Figure 5: Optics - Haze (%)

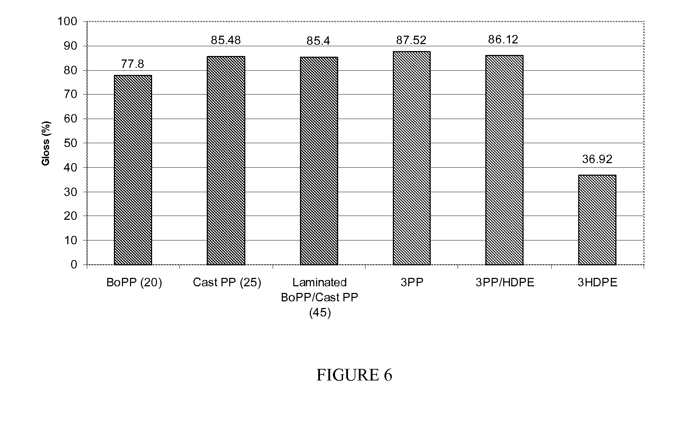

Figure 6: Optics - Gloss 45° (%)

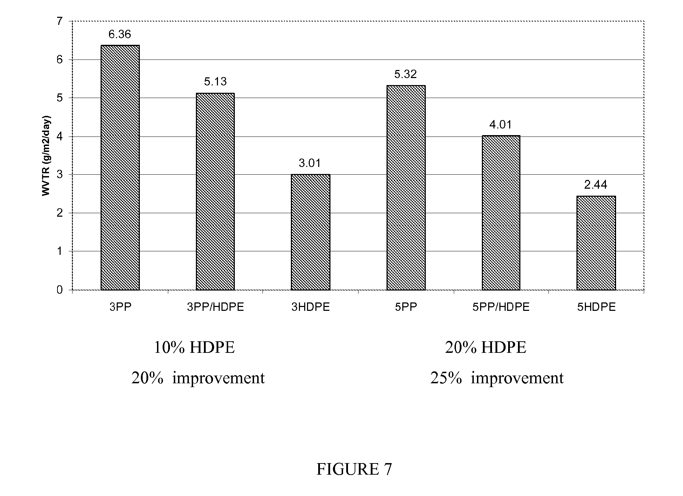

Property results for the three layer (45/10/45) films and five layer films are shown in Figures 7-12.
Figure 7: Water vapor transmission rate of 45 µm films.

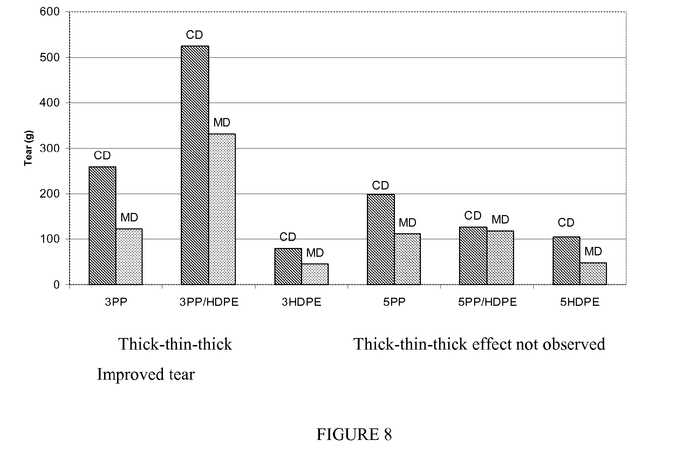

Figure 8: Tear CD and MD

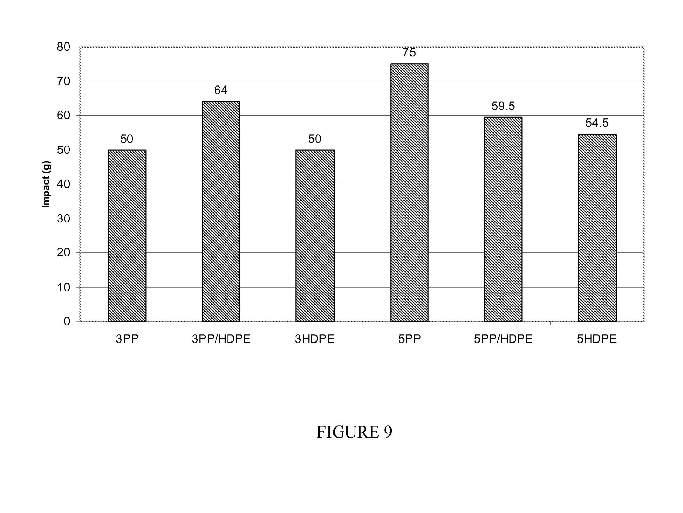

Figure 9: Drop Dart Impact

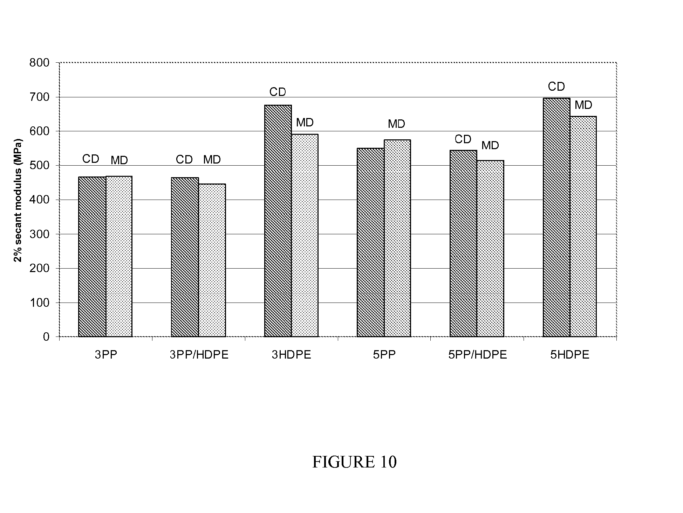

Figure 10: 2% Secant Modulus CD and MD

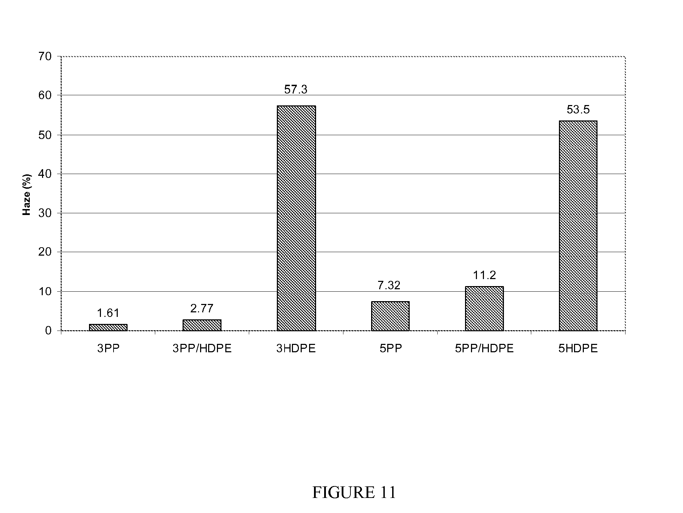

Figure 11: Optics - Haze (%)

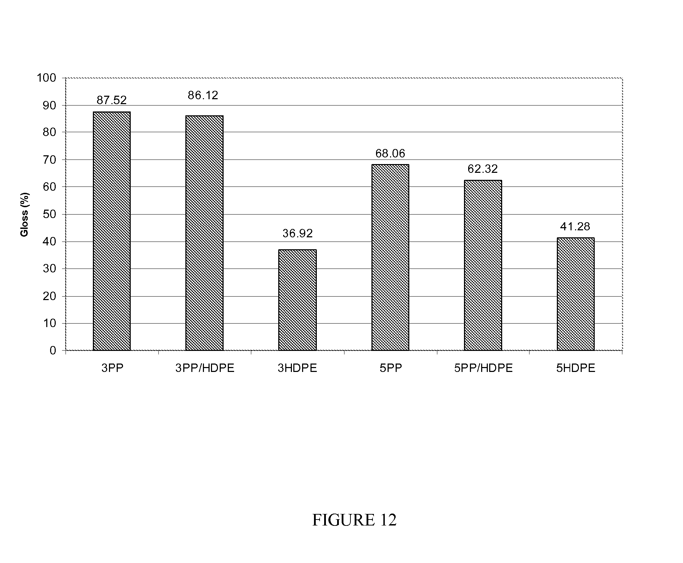

Figure 12: Optics - Gloss 45° (%)

The 3 layer, 10% HDPE film had a WVTR of 5.13. The 5 layer, 20% HDPE film had a WVTR of 4.01

For the 3 layer, 10% HDPE film, the tear improved, and the optics were good.

The WVTR: 10% HDPE (3 layer) showed a 20% improvement over the cast PP film. The 20% HDPE (5 layer) showed a 35% improvement over the cast PP film. The thick-thin-thick concept improves tear significantly.

Impact: smaller effect of thin layer of HDPE, still improved secant modulus, similar to that of the cast PP. The three layer film had similar optics to those of the cast PP film. Five layer film showed similar properties to the three layer film

## Claims

1. A film comprising at least three layers, one inner layer adjacent to two outer layers, and wherein at least one inner layer is formed from a composition comprising an ethylene-based polymer with a density greater than, or equal to, 0.945 g/cc or a cyclic olefin copolymer; and
wherein each outer layer is, independently, formed from a composition comprising a propylene-based polymer;
and wherein the at least one inner layer is less than, or equal to, 25 percent of the total film thickness.

2. The film of Claim 1, wherein the least one inner layer is less than, or equal to, 20 percent of the total film thickness.

3. The film of Claim 1, wherein the least one inner layer is less than, or equal to, 18 percent of the total film thickness.

4. The film of any of the preceding claims, wherein the at least one inner layer is formed from a composition comprising an ethylene-based polymer with a density greater than, or equal to, 0.945 g/cc.

5. The film of Claim 4, wherein the ethylene-based polymer has a density greater than, or equal to, 0.95 g/cc, preferably greater than, or equal to, 0.96 g/cc.

6. The film of any of the preceding claims, wherein the propylene-based polymer has a density greater than, or equal to, 0.88 g/cc, preferably greater than, or equal to, 0.89 g/cc.

7. The film of any of the preceding claims, wherein the propylene-based polymer has a melt flow rate (MFR) greater than, or equal to, 6 g/10 min, preferably greater than, or equal to, 8 g/10 min.

8. The film of any of the preceding claims, wherein the propylene-based polymer is a propylene homopolymer.

9. The film of any of the preceding claims, wherein each outer layer is formed from the same composition.

10. The film of any of the preceding claims, wherein the film is un-oriented.

11. The film of any of the preceding claims, wherein film consists of three layers.

12. The film of Claim 11, wherein the three layers have a thickness ratio from 40/20/40 to 45/10/45.

13. The film of Claim 11 or Claim 12, wherein each outer layer is formed from a propylene-based polymer has a density greater than, or equal to, 0.88 g/cc, preferably greater than, or equal to, 0.89 g/cc.

14. The film of Claim 13, wherein the propylene-based polymer has a melt flow rate (MFR) greater than, or equal to, 6 g/10 min, preferably greater than, or equal to, 8 g/10 min.

15. The film of any of Claims 1-10, wherein film consists of five layers.

16. The film of Claim 15, wherein the five layers have a 25/10/30/10/25 thickness ratio.

17. The film of Claim 15 of Claim 16, wherein at least two inner layers is formed from a composition comprising an ethylene-based polymer with a density greater than, or equal to, 0.945 g/cc, preferably greater than, or equal to, 0.95 g/cc.

18. The film of any of Claims 15-17, wherein each outer layer is formed from a propylene-based polymer has a density greater than, or equal to, 0.88 g/cc, preferably greater than, or equal to, 0.89 g/cc.

19. The film of Claim 18, wherein the propylene-based polymer has a melt flow rate (MFR) greater than, or equal to, 6 g/10 min, preferably greater than, or equal to, 8 g/10 min.

20. The film of any of the preceding claims, wherein the film has a total thickness less than, or equal to, 100 microns.

21. The film of any of the preceding claims, wherein the film has a total thickness less than, or equal to, 50 microns.

22. The film of any of the preceding claims, wherein the film is formed by a co-extrusion process.

23. The film of Claim 22, wherein the film is formed by a coextrusion blown film process.

24. The film of any of the preceding claims, wherein the film has a WVTR less than, or equal to, 5 g/m²/day, preferably less than, or equal to, 4 g/m²/day.

25. The film of any of the preceding claims, wherein the film has a CD tear strength greater than, or equal to, 400 g, preferably greater than, or equal to, 500 g.

26. The film of any of the preceding claims, wherein the film has a MD tear strength greater than, or equal to, 200 g, preferably greater than, or equal to, 300 g.

27. An article comprising at least one component formed from the film of any of claims 1-26.
